# EUROPÄISCHE PATENTSCHRIFT

(11) **EP 2 596 323 B1**
(45) Veröffentlichungstag und Bekanntmachung des Hinweises auf die Patenterteilung: **19.11.2014**
(21) Anmeldenummer: 11767614.8
(22) Anmeldetag: 21.07.2011
(51) Int. Cl.: G01D 5/14

(54) **WEGMESSUNG MITTELS KUNSTSTOFFSPIRALE UND DIAMETRALEM MAGNETEN**
PATH MEASUREMENT USING A PLASTIC SPIRAL AND A DIAMETRIC MAGNET
ODOMÉTRIE À L'AIDE DE SPIRALES EN MATIÈRE PLASTIQUE ET D'AIMANTS DIAMÉTRAUX

(30) Priorität: 23.07.2010 DE 102010032170
(43) Veröffentlichungstag der Anmeldung: 29.05.2013
(73) Patentinhaber: Hirschmann Automotive GmbH, 6830 Rankweil-Brederis (AT)
(72) Erfinder: LORENZ, Thomas, A-6800 Feldkirch Nofels (AT)
(74) Vertreter: Greif, Thomas
(86) Internationale Anmeldenummer: PCT/EP2011/003663
(87) Internationale Veröffentlichungsnummer: WO 2012/010312

(56) Entgegenhaltungen:
- DE-A1-102008 018 432
- US-A1- 2009 256 554

## Beschreibung

Die Erfindung betrifft eine Sensorvorrichtung, ausgebildet zur Erfassung einer linearen Bewegung eines Messobjektes, wobei ein Sensor und ein damit zusammenwirkendes Magnetsystem vorgesehen ist, gemäß den Merkmalen des Oberbegriffes des Patentanspruches 1.

Eine gattungsgemäße Sensorvorrichtung ist aus der DE 10 2010 053 217 A1 bekannt. Dieser Stand der Technik offenbart eine Sensoranordnung, ausgebildet zur Erfassung der Position eines linear bewegbaren Elementes, wobei die Sensoranordnung einen Magneten sowie ein die Position des Magneten erfassendes Sensorelement aufweist, wobei ein ortsfester Träger vorgesehen ist und der Träger zur Aufnahme des Sensorelementes und zur Aufnahme des linear und relativ zu dem Magneten umfassenden bewegbaren Elementes ausgebildet ist. Bei dieser Sensoranordnung ist lediglich ein einziger mit dem magnetisch sensitiven arbeitenden Sensorelement zusammenwirkender Magnet vorhanden, wobei der Magnet länglich ist und einen eckigen Querschnitt aufweist und der längs seiner Erstreckung diagonal magnetisiert ist. Dabei ist der Magnet entweder als kunststoffgebundener Magnet ausgebildet oder von einem anisotropen Magnetmaterial gebildet. Damit die Funktionsweise dieser Sensoranordnung realisiert werden kann, ist es erforderlich, dass der Magnet länglich und damit über die gesamte zu erfassende Wegstrecke des Messobjektes ausgebildet ist. In der Praxis hat sich herausgestellt, dass mit einer Sensoranordnung sehr gut mittellange Wege, insbesondere von wenigen Zentimetern, erfasst werden können. Jedoch hat diese Sensoranordnung den Nachteil, dass eben nur mittellange Wege und damit nicht beliebig lange Wege des Messobjektes erfasst werden können. Außerdem besteht eine Schwierigkeit in der Herstellung des länglichen Magnetes, der sich über die gesamte zu messende Wegstrecke erstreckt, da solche Magnete nur sehr schwierig reproduzierbar zu vertretbaren Kosten herstellbar sind. Insbesondere kunststoffgebundene Magnete und Magnete, die von einem anisotropen Magnetmaterial gebildet sind, lassen sich nicht ohne weiteres und vor allen Dingen nicht zu vertretbaren Kosten, insbesondere in einer Serienproduktion, herstellen.

Der Erfindung liegt daher die Aufgabe zugrunde, eine Sensorvorrichtung bereitzustellen, die gegenüber dem Stand der Technik verbessert ist bzw. eine Alternative darstellt.

Diese Aufgabe ist durch die Merkmale des Patentanspruches 1 gelöst.

Erfindungsgemäß ist vorgesehen, dass das Magnetsystem als ein drehbar gelagerter und diametral magnetisierter Magnet ausgebildet ist, wobei die Drehbewegung mittels einer den Magneten durchdringenden Kunststoffspirale erzeugt wird. Die erfindungsgemäße Sensorvorrichtung hat den Vorteil, dass der drehbar gelagerte und diametral magnetisierte Magnet von der Kunststoffspirale, die eine Linearbewegung ausführt, in eine Drehbewegung versetzt wird, wobei diese Drehbewegung von dem Sensor erfasst und ausgewertet wird. Dadurch wird auf einfache Art und Weise die lineare Bewegung des Messobjektes in eine rotierende Bewegung des Magnetes umsetzt, wobei diese rotierende Bewegung von dem Sensor erfasst und ausgewertet werden kann. Die rotierende Bewegung des Magneten ist dabei ein Maß für den zurückgelegten Weg des Messobjektes. Ein weiterer Vorteil ist darin zu sehen, dass eine Kunststoffspirale mit entsprechender Steigerung ihrer Windung einfach hergestellt werden kann. Dies erfolgt in vorteilhafter Weise bevorzugt in einem Kunststoffspritzgussverfahren. Dabei ist es denkbar, dass die Kunststoffspirale als eigenständiges Bauteil oder alternativ als Bestandteil des Messobjektes ausgebildet ist. Da die Kunststoffspirale bei der linearen Bewegung des Messobjektes den Magneten durchdringt, ist dieser vorzugsweise in Zylinderform ausgebildet und weist in seinem Inneren eine Öffnung, beispielsweise eine Bohrung, auf, deren Innenkontur auf die Steigerung der Kunststoffspirale derart abgestimmt ist, dass durch die lineare Bewegung der Kunststoffspirale bei der Durchdringung des Magneten dieser in eine Drehbewegung versetzt wird. Dabei kann diese Innenkontur, zum Beispiel ein auf die Steigerung der Kunststoffspirale abgestimmter Vorsprung oder Steg oder dergleichen, mit Herstellung des Magneten vorgesehen werden oder nachträglich angebracht werden. Mit Herstellung des Magneten lässt sich die Innenkontur dann besonders gut realisieren, wenn der Magnet in einem Kunststoffspritzgussverfahren hergestellt wird. Dabei handelt es sich um einen magnetischen oder magnetisierbaren Kunststoff-Werkstoff, der in eine entsprechende Werkzeugform, die der späteren Kontur des fertigen Magneten entspricht, eingespritzt wird. Je nach Art des gewählten Werkstoffes ist mit Herstellung des Magneten dieser schon fertig magnetisiert oder wird in einem nachträglichen Verfahren magnetisiert. Alternativ dazu ist es denkbar, einen Permanentmagneten, zum Beispiel einen topfförmigen Permanentmagneten, mit einer Öffnung (zum Beispiel einer Bohrung) zu versehen und anschließend mit einem magnetischen oder nichtmagnetischen Kunststoff-Werkstoff zu umspritzen, wobei bei diesem Umspritzvorgang die Innenkontur, mit der der fertige Magnet mit der Kunststoffspirale zusammenwirkt, hergestellt wird. Dabei wird zum Schutz des Magneten dieser vorzugsweise vollständig mit Kunststoff umspritzt, wobei auch das Umspritzen nur von Teilbereichen, beispielsweise dem Innenbereich der Bohrung und ggf. darumliegende Bereiche, denkbar ist. Ebenfalls ist es alternativ dazu denkbar, den Magneten mit Teilen, die als separate Bestandteile ausgebildet sind, zu versehen, wobei dann diese Teile das Zusammenwirken mit der Kunststoffspirale realisieren. Diese separaten Teile sind ebenfalls vorzugsweise aus einem Kunststoff-Werkstoff gefertigt, können aber auch aus anderen, ebenfalls magnetischen oder auch metallischen Werkstoffen gefertigt sein.

Die Form der Kunststoffspirale, insbesondere deren Steigung der Windung oder der Windungen, sowie die Innenform des drehbar gelagerten Magneten sind derart aufeinander abgestimmt, dass die lineare Bewegung der Kunststoffspirale in eine auswertbare Drehbewegung des Magneten umgesetzt wird. Dabei entspricht in bevorzugter Weise der einmal komplett zurückgelegte Weg des Messobjektes einer Drehbewegung des Magneten um 360 Grad. Alternativ dazu ist es denkbar, dass mit Zurücklegung des vollständigen Weges des Messobjektes der Magnet mehr oder weniger als ein Mal um 360 Grad gedreht wird. Für den Fall, dass bei der Zurücklegung des vollständiges Weges des Messobjektes der Magnet mehr als ein Mal vollständig gedreht wird (Bewegung um 360 Grad), kann die Anzahl der Bewegungen des Magneten um 360 Grad gezählt werden, damit bekannt ist, an welcher Stelle sich das Messobjekt beim Zurücklegen des linearen Weges gerade befindet.

Erfindungsgemäß wird also für eine Wegmessung eines Zielobjektes mittels einer Kunststoffspirale ein Magnet abhängig vom Weg des Zielobjektes (Messobjekt) in eine Rotationsbewegung versetzt. Ein Sensor, der über dem Magnet positioniert ist, misst das drehende Magnetfeld, das durch den rotierenden Magneten erzeugt wird. Die Kunststoffspirale ist vorzugsweise so konstruiert, dass sich der Magnet bei der maximalen Linearbewegung um 360 Grad dreht. Die maximale Messlänge ist dabei direkt abhängig von der Steigung der Kunststoffspirale.

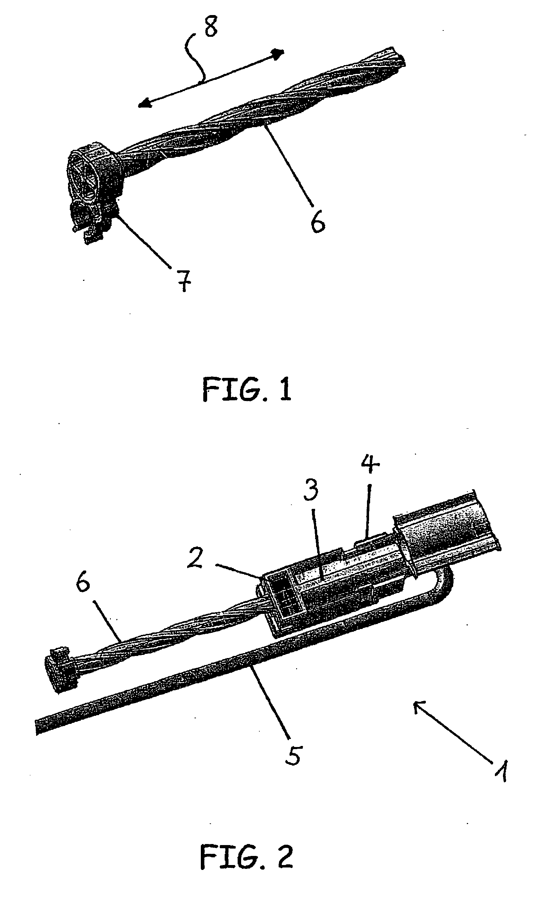

Im Folgenden wird die Erfindung anhand der Figuren 1 und 2 beschrieben und näher erläutert.

In den Figuren 1 und 2 ist, soweit im Einzelnen dargestellt, eine beispielhafte Sensorvorrichtung 1 gezeigt. Diese Sensorvorrichtung 1 ist zur Erfassung einer linearen Bewegung eines hier nicht dargestellten Messobjektes ausgebildet. Die Sensorvorrichtung 1 weist ein Magnetsystem auf, das als ein drehbar gelagerter und diametral magnetisierter Magnet 2 ausgebildet ist. Dem Magneten 2 ist ein Sensor 3 zugeordnet, wobei vorgesehen ist, dass der Magnet 2 und der gegenüberliegende Sensor 3 in einem Gehäuse 4, beispielsweise einem Kunststoffgehäuse, angeordnet sind. Die Ausgangssignale des Sensors 3 werden über ein schematisch dargestelltes Kabel 5 an eine nicht dargestellte auswerte Vorrichtung abgegeben.
Damit der drehbar gelagerte und diametral magnetisierte Magnet 2 in eine auswertbare Drehbewegung versetzt wird, ist eine Kunststoffspirale 6 vorgesehen, die den Magneten 2 durchdringt. Das bedeutet, dass die Kunststoffspirale 6 die lineare Bewegung des Messobjektes mit vollzieht und dabei den Magneten 2 durchdringt, so dass dieser in die Drehbewegung versetzt wird, die von dem Sensor 3 ausgewertet werden kann. Dabei ist sicherzustellen, dass die lineare Bewegung der Kunststoffspirale 6 beim Durchdringen des Magneten 2 nicht von dem Sensor 3 oder anderer Bestandteile der Sensorvorrichtung 1 behindert wird.

Damit die Kunststoffspirale 6 an dem Messobjekt befestigt werden kann, weist diese ein geeignetes Befestigungselement auf. Ein solches Befestigungselement ist in den Figuren 1 und 2 beispielhaft gezeigt und mit der Bezugsziffer 7 versehen. Dieses Befestigungselement 7 ist ein separater Bestandteil zu der Kunststoffspirale 6 und wird auf geeignete Weise (zum Beispiel durch Verklemmen oder Verkleben) an der Kunststoffspirale 6, vorzugsweise an deren Ende, befestigt. Alternativ dazu kann auch das Befestigungselement schon mit Herstellung der Kunststoffspirale 6, zum Beispiel in einem Kunststoffspritzgussverfahren, hergestellt werden, so dass die Kunststoffspirale 6 und das Befestigungselement 7 ein einteiliges Bauteil bilden. Weist die Kunststoffspirale 6 das Befestigungselement 7 auf, ist der Vorteil gegeben, dass das Messobjekt und die Sensorvorrichtung 1 separate Bestandteile sind. In diesem Fall ist also die Kunststoffspirale 6 an dem relativ zu dem ortsfesten Sensor 3 bewegbaren Messobjekt befestigt. Alternativ dazu ist die Kunststoffspirale 6 Bestandteil des relativ zu dem ortsfesten Sensor 3 bewegbaren Messobjektes. Hierdurch ist der Vorteil gegeben, dass mit Herstellung des Messobjektes bzw. eines Teiles des Messobjektes die Kunststoffspirale schon gleichzeitig mithergestellt werden kann, so dass spätere separate Montagevorgänge der Kunststoffspirale 6 an dem Messobjekt entfallen können.

In Figur 1 ist die Kunststoffspirale 6 als eigenständiges Bauteil separat dargestellt, wobei in diesem Fall das Befestigungselement 7 an dem einen Ende der Kunststoffspirale 6 angeordnet ist. Hierbei ist erkennbar, dass die Kunststoffspirale mehrere Windungsgänge und dementsprechend mehrere Windungsstege aufweist, so dass bei Querschnittsbetrachtung der Kunststoffspirale 6 abwechselnd Nuten und Stege sich radial umlaufend betrachtet abwechseln. Dieser Querschnittskontur entspricht die Kontur des Magneten 2 in dem Bereich, in dem die Kunststoffspirale 6 den Magneten durchdringt. Dieser Bereich wird von dem Magneten 2 selber gebildet oder kann durch entsprechende Bauteile, die mit dem Magneten 2 zusammengebracht werden, gebildet werden. Durch diese Abstimmung des äußeren Konturbereiches der Kunststoffspirale 6 und des inneren Bereich des Magneten 2, der von der Kunststoffspirale 6 durchdrungen wird, kann die lineare Bewegung 8, folglich eine Wegstrecke, dadurch erfasst werden, dass die Wegstrecke 8 in eine Drehbewegung des Magneten 2, die von dem Sensor 3 erfasst und ausgewertet wird, umgesetzt wird. Dabei ist die Steigung der Windung der Kunststoffspirale 6 in Abhängigkeit der von dem Messobjekt zurücklegbaren linearen Wegstrecke 8 gewählt. Das bedeutet, dass beim einmaligen Zurücklegen der vollständigen Wegstrecke 8 der Magnet 2 insbesondere in dem Gehäuse 4 ein Mal um 360 Grad gedreht wird. Wird die Wegstrecke 8 wieder in die umgekehrte Richtung zurückgelegt, wird auch der Magnet 2 vorzugsweise in dem Gehäuse 4 um die gleiche Drehbewegung, nämlich 360 Grad, jetzt in der anderen Drehrichtung, bewegt. Je nach Wahl der Steigung der Windung der Kunststoffspirale 6 in Abhängigkeit der von dem Messobjekt zurücklegbaren Wegstrecke 8 kann der Magnet 2 auch mehr oder weniger als ein Mal um 360 Grad in die Drehbewegung versetzt werden.

### Bezugszeichenliste

- 1.: Sensorvorrichtung
- 2.: Magnet
- 3.: Sensor
- 4.: Gehäuse
- 5.: Kabel
- 6.: Kunststoffspirale
- 7.: Befestigungselement
- 8.: Wegstrecke

## Patentansprüche

1. Sensorvorrichtung (1), ausgebildet zur Erfassung einer linearen Bewegung eines Messobjektes, wobei ein Sensor (3) und ein damit zusammenwirkendes Magnetsystem vorgesehen ist, **dadurch gekennzeichnet, dass** das Magnetsystem als ein drehbar gelagerter und diametral magnetisierter Magnet (2) ausgebildet ist, wobei die Drehbewegung mittels einer den Magneten (2) durchdringenden Kunststoffspirale (6) erzeugt wird.

2. Sensorvorrichtung (1) nach Anspruch 1, **dadurch gekennzeichnet, dass** die Sensorvorrichtung (1) ein Gehäuse (4) aufweist, in dem der Magnet (2) drehbar gelagert ist.

3. Sensorvorrichtung (1) nach Anspruch 1, **dadurch gekennzeichnet, dass** die Kunststoffspirale (6) ein Befestigungselement (7) aufweist.

4. Sensorvorrichtung (1) nach einem der vorhergehenden Ansprüche, **dadurch gekennzeichnet, dass** die Kunststoffspirale (6) an dem relativ zu dem ortsfesten Sensor (3) bewegbaren Messobjekt befestigt ist.

5. Sensorvorrichtung (1) nach einem der vorhergehenden Ansprüche, **dadurch gekennzeichnet, dass** die Kunststoffspirale (6) Bestandteil des relativ zu dem ortsfesten Sensor (3) bewegbaren Messobjekts ist.

6. Sensorvorrichtung (1) nach einem der vorhergehenden Ansprüche, **dadurch gekennzeichnet, dass** die Steigung der Windung der Kunststoffspirale (6) in Abhängigkeit der von dem Messobjekt zurücklegbaren Wegstrecke (8) gewählt ist.

7. Sensorvorrichtung (1) nach einem der vorhergehenden Ansprüche, **dadurch gekennzeichnet, dass** die Kunststoffspirale (6) ein Spritzgussteil ist.

## Claims

1. Sensor device (1) designed to detect a linear movement of an object to be measured, a sensor (3) and a magnet system interacting therewith being provided, **characterized in that** the magnet system is formed as a rotatably mounted and diametrically magnetized magnet (2), the rotational movement being generated by means of a plastic spiral (6) that penetrates the magnet (2).

2. Sensor device (1) according to Claim 1, **characterized in that** the sensor device (1) has a housing (4), in which the magnet (2) is rotatably mounted.

3. Sensor device (1) according to Claim 1, **characterized in that** the plastic spiral (6) has a fixing element (7).

4. Sensor device (1) according to one of the preceding claims, **characterized in that** the plastic spiral (6) is fixed to the object to be measured, which can be moved relative to the stationary sensor (3).

5. Sensor device (1) according to one of the preceding claims, **characterized in that** the plastic spiral (6) is a constituent part of the object to be measured, which can be moved relative to the stationary sensor (3).

6. Sensor device (1) according to one of the preceding claims, **characterized in that** the pitch of the winding of the plastic spiral (6) is chosen as a function of the distance (8) that can be covered by the object to be measured.

7. Sensor device (1) according to one of the preceding claims, **characterized in that** the plastic spiral (6) is an injection moulded part.

## Revendications

1. Dispositif de détection (1) destiné à détecter un mouvement linéaire d'un objet à mesurer, un capteur (3) et un système magnétique coopérant avec celui-ci étant prévus, **caractérisé en ce que** le système magnétique est réalisé sous forme d'aimant (2) supporté à rotation et aimanté diamétralement, le mouvement de rotation étant produit au moyen d'une spirale en matière plastique (6) traversant l'aimant (2).

2. Dispositif de détection (1) selon la revendication 1, **caractérisé en ce que** le dispositif de détection (1) présente un boîtier (4) dans lequel l'aimant (2) est supporté à rotation.

3. Dispositif de détection (1) selon la revendication 1, **caractérisé en ce que** la spirale en matière plastique (6) présente un élément de fixation (7).

4. Dispositif de détection (1) selon l'une quelconque des revendications précédentes, **caractérisé en ce que** la spirale en matière plastique (6) est fixée à l'objet à mesurer pouvant être déplacé par rapport au capteur fixe (3).

5. Dispositif de détection (1) selon l'une quelconque des revendications précédentes, **caractérisé en ce que** la spirale en matière plastique (6) fait partie de l'objet à mesurer pouvant être déplacé par rapport au capteur fixe (3).

6. Dispositif de détection (1) selon l'une quelconque des revendications précédentes, **caractérisé en ce que** le pas hélicoïdal de la spirale en matière plastique (6) est sélectionné en fonction de la distance (8) pouvant être parcourue par l'objet à mesurer.

7. Dispositif de détection (1) selon l'une quelconque des revendications précédentes, **caractérisé en ce que** la spirale en matière plastique (6) est une pièce moulée par injection.
